# EUROPEAN PATENT APPLICATION

(11) **EP 2 421 302 A1**
(43) Date of publication of application: **22.02.2012**
(21) Application number: 10173605.6
(22) Date of filing: 20.08.2010
(51) Int. Cl.: H04W 48/16, H04W 48/10, H04W 48/18

(54) **Core network selection in a shared radio access network**

(71) Applicant: Vodafone Holding GmbH, 40213 Düsseldorf (DE)
(72) Inventor: Lu, Yang, 40489 Düsseldorf (DE); Dohmann, Dierk, 40547 Düsseldorf (DE); Patanapongpibul, Leo, Weybridge Surrey KT13 8JU (GB)
(74) Representative: Jostarndt, Hans-Dieter

(57) **Abstract**

In order to reduce the amount of PLMN information broadcasted in a shared radio access network (101) for allowing a mobile communication device (103) to select a core network operator, the invention suggests a method for selecting a core network (102a; 102b; 105) to serve a mobile communication device (103). The method comprises the steps of: (i) receiving in the mobile communication device (103) a first identifier from a shared radio access network (101) being connected to multiple core networks (102a, 102b), (ii) reading second identifiers of the multiple core networks (102a, 102b) from a data item stored in the mobile communication device (103) upon receipt of the first identifier, the data item comprising an allocation between the first identifier and the second identifiers, (iii) selecting the core network (102a; 102b; 105) from a group of available core networks (102a; 102b; 105), the group being determined based upon the second identifiers. Furthermore, the invention suggests a mobile communication device (103) for executing the method.

## Description

The invention relates to the selection of a core network operator in a shared radio access network. More specifically, the invention is related to a method for selecting a core network to serve a mobile communication device and a mobile communication device. The method is particularly suitable for selecting a core network connected to a shared radio access network.

Mobile communication networks include a core network, which is operated by a mobile network operator and comprises network components for providing mobile services, such as services for speech and/or data connections. Mobile communication devices access the core network through a radio access network which is connected to the core network. The radio access network provides the radio technology for establishing wireless connections between mobile communication devices and the mobile communication network.

Usually, each core network operator provides his own radio access network for providing access to the operator's core network. However, the deployment of a radio access network involves high efforts and costs. Therefore, it has been proposed that core network operators share a common radio access network. In view of the Universal Mobile Telecommunications System (UMTS), configurations and procedures for shared radio access networks are described in the document TS 23.251 (version 9.2.0) of the 3rd Generation Partnership Project (3GPP).

As in conventional mobile communication networks with operator specific radio access networks, a core network operator is identified by an identifier called PLMN-ID (PLMN: Public Land Mobile Network) in a shared radio access network scenario. Operator specific radio access networks send the PLMN-ID of the associated core network in the system broadcast information, which is evaluated by mobile communication devices for performing a PLMN selection process. This process involves a mobile communication device selecting a PLMN for registration from the available PLMNs automatically or in a process controlled by the user. According to TS 23.251, a shared radio access network includes in the system broadcast information the PLMN-IDs of all associated core networks in the shared mobile communication network, and a mobile communication device in the coverage area of the shared radio access network takes the broadcasted PLMN-IDs into account in the PLMN selection process.

The inclusion of multiple PLMN-IDs leads to a higher data volume in the broadcast system information compared to those of an operator specific radio access network, which does only include one PLMN-ID. While in the Universal Terrestrial Radio Access Network (UTRAN) according to the UMTS standard, there is sufficient capacity to include additional PLMN-IDs. This may not be the case in radio access networks of other types. In particular, the GSM EDGE Radio Access Network (GERAN) may not allow including further PLMN-IDs in the broadcast system information.

Therefore, it is an object of the present invention to reduce the amount of PLMN information broadcasted in a shared radio access network for allowing mobile communication devices to select a core network.

The object is achieved by a method according to claim 1 and by a mobile communication device according to claim 10. Embodiments of the method and the mobile communication device are given in the dependent claims.

According to a first aspect of the invention, a method for selecting a core network to serve a mobile communication device is suggested. The method comprises the following steps:
- Receiving in the mobile communication device a first identifier from a shared radio access network being connected to multiple core networks,
- reading second identifiers of the multiple core networks from a data item stored in the mobile communication device upon receipt of the first identifier, the data item comprising an allocation between the first identifier and the second identifiers,
- selecting the core network from a group of available core networks, the group being determined based upon the second identifiers.

According to a second aspect, the invention suggests a mobile communication device. The mobile communication device comprises a data item including an allocation between a first identifier broadcasted in a shared radio access network and second identifiers associated to multiple core networks connected to the shared radio access network. Furthermore, the mobile communication device comprises an evaluation unit being adapted to read the second identifiers from the data item upon receipt of the first identifier from the shared radio access network, and a selector being adapted to select a core network from a group of available core networks, the group being determined based upon the second identifiers.

It is an advantage of the method and the mobile communication device that the shared radio access network does only broadcast one identifier. The core networks that are connected to the shared radio access network are determined using the data item stored in the mobile communication device. Thus, the shared radio access network does not need to broadcast identifiers of the connected core networks connection. Rather, the shared radio access network only broadcasts one identifier, which is associated to the shared network or to both core networks. Hereby, the amount of PLMN information to be broadcasted in a shared radio access network is reduced.

In one embodiment of the method and the mobile communication device, the data item is accessed for reading the second identifiers only in response to a receipt of information broadcasted by the shared radio access network, the information indicating that the radio access network is shared. An absence of the information indicates that a received identifier is the core network identifier of a core network connected with a radio access network broadcasting the identifier. In this case the received identifier may be directly taken into account for preparing the group of available core networks, i.e. without comparing the identifier with identifiers specified in the data item. By using the information, the selection process is simplified and accelerated.

A related embodiment of the method and the mobile communication device provides that the information is included in a predetermined bit in the system broadcast information sent by the shared radio access network. Hereby, the indication that a radio access network is a shared radio access network can be made with minimal additional amount of data to be included in the system broadcast information. The system broadcast information also comprises the first identifier.

In one embodiment of the method and the mobile communication device, the data item is stored in a user identification module included in the mobile communication device. In particular, this allows the mobile network operator, which usually issues the user identification module, to specify and to update the data item. Furthermore, the data item can be made available independent of the terminal hardware with which the user identification module is connected.

When performing a core network selection process, the mobile communication device may also detect the availability of further radio access networks, which are not shared. In such radio access networks the broadcasted identifier is the identifier of the core network connected with the radio access network. Therefore, in one embodiment of the method and the mobile communication device, the group of available core networks is further determined based on at least one third identifier received from a further radio access network.

As described before, in case of use of the information indicating that a network is shared and if this information is present in the data broadcasted by the further radio access network, the third identifier can be directly considered for determining the group of available networks without having to access the data item. If the information is not used, it may be determined that the further radio access network is not shared, when a comparison of the third identifier with the identifiers in the data item yields no match.

Furthermore, in one embodiment of the method and the mobile communication device, upon a selection of a core network associated with the second identifier, the second identifier is transmitted to the shared radio access network in connection with a request for registering the mobile communication device in the core network associated with the second identifier.

Hereby, the shared radio access network is enabled to route the request for registration to the intended core network. Accordingly, a related embodiment of the method and the mobile communication device provides that the shared radio access network routes the request to the core network associated with second identifier received in connection with the request for registration.

Moreover, in addition to the mobile communication device, the invention suggests a system comprising the mobile communication device and the shared radio access network. In the system, the shared radio access network is adapted to route the request to the core network associated with the second identifier received in connection with the request for registration.

A further embodiment of the method and the mobile communication device provides that the shared radio access network is a GERAN. As initially described, in such radio access network, there is rather limited capacity for broadcasting core network information so that the invention and its embodiments can be implemented in connection with such radio access networks especially advantageously. However, the shared radio access network may also be a radio access network of a different type, e.g. a UTRAN. Also in such other networks the invention particularly helps to reduce the information to be broadcasted.

According to a further aspect, the invention suggests a computer program including code software the executing the method according to the invention or its embodiments, when the computer program is executed on a processor unit. The processor unit may particularly be a processor of the mobile communication device.

The aforementioned and other aspects of the invention will be apparent from and elucidated with reference to the embodiments described hereinafter making reference to the accompanying drawings.

In the drawings,
- Fig. 1: shows a mobile communication system including a shared radio access network connected to multiple core networks, and
- Fig. 2: shows a functional block diagram of a mobile communication device for accessing the shared radio network.

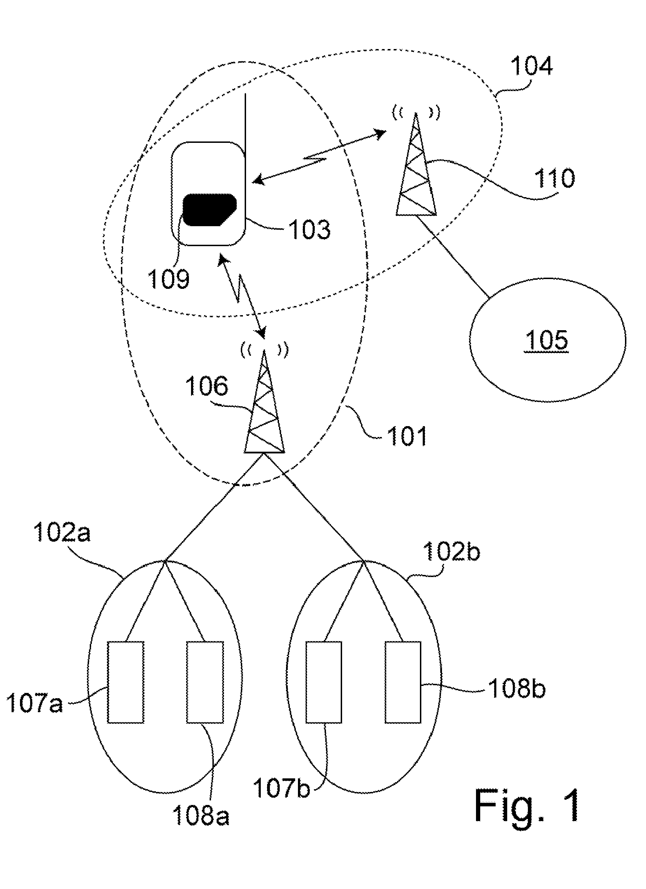

Figure 1 shows a shared radio access network 101 which is connected to multiple core networks 102a,b. By way of example, two core networks 102a,b are depicted, although more than two core networks may be connected to the shared radio access network 101. In addition, figure 1 depicts a mobile communication device 103 that is located in the serving area of the shared radio access network 101. Optionally, the location of the mobile communication device 103 is also served by a further radio access network 104, which is connected to exactly one core network 105.

The shared radio access network 101 is configured as a cellular network comprising a plurality of radio cells, which are served by at least one base station system 106. In the embodiment described hereinafter, the shared radio access network 101 is configured as a GERAN and the base station system 106 is a Base Station Subsystem (BSS) according to the GSM specification, which includes a Base Station Controller (BSC) and one or more Base Transceiver Stations (BTS), which are connected to the BSS and serve as access points of the radio cells. The radio access network 104 may be configured similarly and may also include at least one base station system 110, which may also be configured as a BSS or in another way known to a person skilled in the art. However, the base station systems 104 and/or 106 may likewise be configured in another way. For instance, it may be a base station system in a UTRAN including a Radio Network Controller (RNC) which is connected to one or more NodeBs.

In the depicted embodiment, the core networks 102a,b associated with the shared radio access network 101 comprise a circuit switched (CS) part for providing CS services, such as speech connections, and a packet switched (PS) part for providing PS services, such as data connections or other multimedia services. In the embodiment described herein, the PS services use the GPRS. The CS part of each core network 102a,b includes a switching unit 107a,b, which is configured as a Mobile Switching Centre (MSC), and the PS part of each core network 102a,b includes a routing unit 108a,b, which is configured as Serving GPRS Support Node (SGSN). In further embodiments, one or both core networks 102a,b may include only a CS or PS part and/or the parts may include other network nodes. The core network 105 includes network nodes for providing CS and/or PS services, which are not shown in figure 1. In one embodiment, the core network 105 is configured in the same way as the core networks 102a,b.

The mobile communication device 103 comprises a terminal including a radio module for wirelessly connecting the mobile communication device 103 to a radio access network 101, 104. Furthermore, it includes a user identification module 109 which is detachably connected to the terminal and which is configured as a Subscriber Identification Module (SIM) in the embodiment described herein. The user identification module particularly stores data for identifying and authenticating itself, when the mobile communication device 102 accesses a core network 102a,b, 105. Data memorized in the user identification module 109 are stored in elementary files (EFs).

To each of the core networks 102a,b connected to the shared radio access network 101 and to the core network 105 a unique identifier is assigned, which is referred to as PLMN-ID herein. In each radio cell of the radio access network 104 to which one core network 105 is connected, the serving base station system 110 broadcasts the PLMN-ID assigned to the connected core network 105. The PLMN-ID is included in the system broadcast information (SBI) messages, which comprise the system broadcast information and which are transmitted repeatedly via the broadcast channel of a radio cell, particularly the Broadcast Control Channel (BCCH). The PLMN-ID may particularly be included in the information element "PLMN Identity", which may be part of a Master Information Block (MIB) of the system broadcast information messages.

A further identifier, which is referred to as Common PLMN-ID herein, is used in the shared radio access network 101. In each radio cell of the shared radio access network 101, the serving base station system 106 broadcasts the Common PLMN-ID. For this purpose, the Common PLMN-ID is included in the system information messages. The PLMN-IDs of the core networks 102a,b that are connected to the shared radio access network 101 are not transmitted.

Preferably, the Common PLMN-ID is included into the system information messages sent by the base station system 106 of the shared radio access network 101 at the position at which the system information messages transmitted by the base station 110 of the conventional radio access network 104 include the PLMN-ID of the associated core network 105. In particular, the Common PLMN-ID may be included in the system information message in the information element "PLMN Identity" instead of a PLMN-ID of a core network. Thus, the Common PLMN-ID replaces the PLMN-ID of the core network 105 assigned to the radio access network 104 in the system broadcast information.

In one embodiment, additional information indicating that the radio access network 101 is shared may be transmitted through the broadcast channel in each radio cell of the shared radio access network 101. The additional information may be an additional bit added to the system broadcast information in the shared radio access network 101. In a non-shared radio access network 104, the additional bit is not included in the system broadcast information. As an alternative, the additional bit may be present in the system broadcast information send in a shared radio access network 101 as well as in the system broadcast information send in a non-shared access network 104, but has different values according to whether the radio access network is shared or not.

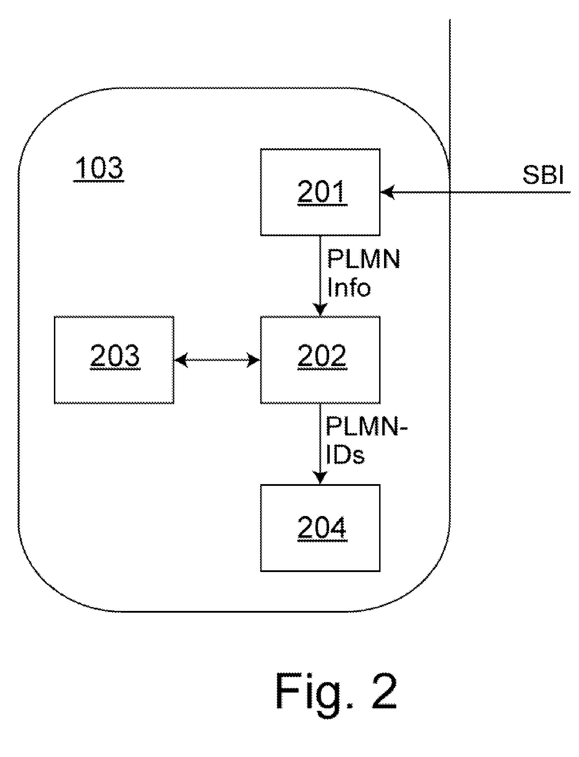

In the user identification module 109 of the mobile communication device 103, a mapping data item 203 (see figure 2) is stored in a non-volatile memory. The mapping data item 203 includes an allocation between the Common PLMN-ID associated with the shared radio access network 101 and the PLMN-IDs of the core networks 102a,b connected to the shared radio access network 101. It is to be understood that the mapping data item 203 also includes mappings between the Common PLMN-IDs broadcasted in further shared radio access networks in the geographical area in which the mobile communication device 103 is used and the PLMN-IDs connected with such shared radio access networks.

The mapping data item 203 may be included in an additional elementary file in the user identification module 109, or it may be added to an existing elementary file. In one embodiment, the mapping data item 203 is added to the already existing elementary file "PLMN Network Name" (EF_{PNN}), which comprises allocations between PLMN-IDs and the full and/or short names of the associated core networks 102a,b, 105 or their operators.

After the mobile communication device 103 is switched on at, it selects in a PLMN selection process a PLMN to serve the mobile communication device 103 at its location. In addition, the PLMN selection process may be carried out, when the mobile communication device 103 is already in normal service mode and certain event triggers the change of the serving core network 102a,b, 105. Such event may be a corresponding input of the user deciding to reselect the core network 102a,b, 105 or a determination that the serving core network 102a,b, 105 can no longer provide normal service.

For selecting a core network 102a,b, 105, the mobile communication device 103 searches for radio cells in the whole spectrum to find the core networks 102a,b, 105 providing service at the location of the mobile communication device 103. Then access to one or more of these core networks 102a,b is tried according to a selection of one or more available core networks 102a,b, which is made in an automatic mode or in a manual mode.

In the following, the PLMN selection process is described making reference to figure 2 that shows functional components of the mobile communication device 103 in a schematic functional block diagram. By way of example, the PLMN selection is described in view of the situation shown in figure 1, in which the mobile communication device 103 is located in a geographical area covered by the shared radio network 101 and the radio access network 104.

A transceiver unit 201 of the mobile communication device 103 scans the relevant frequency spectrum in order to find the radio cells providing the strongest radio signal. In the present situation, these are the radio cells of the shared radio access network 101 and the radio access network 104 the mobile communication device 103 is located in. With respect to such radio cells, the transceiver unit 102 receives SBI messages sent by the base station systems 106, 110 serving the radio cells of the shared radio access network 101 and the radio access network 104. The SBI messages are then forwarded to an evaluation unit 202.

The transceiver unit 201 may comprise the radio module of the mobile communication device and associated control functions, which may implemented as software of a processor unit controlling the radio module. The evaluation unit 202 may likewise be implemented as a software module executing the same or another processor unit of the mobile communication device 103. The same may apply to the PLMN selector 204 described later.

The evaluation unit 202 reads the PLMN information included in each received SBI message, i.e. the PLMN-ID, which may be the PLMN-ID of the core network 105 or the Common PLMN-ID. Moreover, it determines whether in the received SBI messages, the additional information is present which indicates that the radio access network 101 having sent the information is shared.

If the additional information is present and/or indicates that the SBI message has been received from the shared radio access network 101, the PLMN information includes the Common PLMN-ID and the evaluation unit 202 accesses the mapping data item 203 stored in the mobile communication device 102. From the mapping data item 203, the evaluation unit 202 determines the PLMN-ID associated with the Common PLMN-IDs and passes these PLMN-IDs to a PLMN selector 204.

If the additional information is not present and/or indicates that the SBI message has been received from the shared radio access network 101, the evaluation unit 202 forwards the PLMN-ID included in the received SBI message to the PLMN selector 204. Thus, particularly the PLMN-ID associated with the core network 105 included in the SBI message received from the radio access network 104 is forwarded to the PLMN selector 204 in such way. The mapping data item 203 may not be accessed, when there is no indication that the SBI message has been received from a shared radio network 101.

In case the use of the additional information is dispensed with, the evaluation unit 202 may compare the PLMN-IDs included in the received SBI messages with the Common PLMN-IDs included in the mapping data item 203. If a PLMN-ID matches one Common PLMN-ID, the evaluation unit 202 reads the allocated PLMN-IDs from the mapping data item 203 and forwards them to the PLMN selector 204. If no match is determined between the PLMN-ID included in the SBI message and the Common PLMN-IDs, the evaluation unit 202 forwards the received PLMN-ID to the PLMN selector 204. In this embodiment, the mapping data item 203 is accessed with respect to each received PLMN-ID - also with respect to PLMN-IDs of core networks 105 broadcasted in non-shared radio access networks. The use of the additional information restricts the accesses to the mapping data item 203 to the cases in which a Common PLMN-ID is received und thus simplifies and accelerates the PLMN selection process.

Upon the evaluation of the received SBI messages in the evaluation unit 202 and the forwarding of the PLMN-IDs to the PLMN selector 204, the PLMN selector 204 disposes of a list of the PLMN-IDs of the core networks 102a,b, 105 available at the location of the mobile communication device 103. In automatic mode, the PLMN selector 204 automatically selects some or all of the available core networks 102a,b, 105 in certain order and controls the mobile communication device to try to access and register in selected core networks 102a,b, 105 until the registration is successful for one core network 102a,b.

In one embodiment, the order is determined by a list of preferred core networks stored in the non-volatile memory of the user identification module 109. In addition, the user identification module 109 may store a list of forbidden core networks which are not considered for selection. Due to this list, one or more core networks may be excluded from a possible selection. Within the lists, the core networks may again be specified using their PLMN-IDs.

In this embodiment, the PLMN selector 204 starts with controlling the mobile communication device 103 to try to register in the first core network 102a,b, 105 in the list of preferred core networks, the PLMN-ID of which is included in the list of available core networks 102a,b, 105 and not in the list of forbidden core networks. Should the registration fail, the PLMN selector 204 controls the mobile communication device 103 to try to register in the other available core networks 102a,b, 105, which are not in the list of forbidden core networks, in the order of preference specified in the list of preferred core networks.

In manual mode, the PLMN selector 204 may present to the user of the mobile communication device 103 a list specifying the available core networks 102a,b, 105. Within the presented list, the core networks 102a,b, 105 are preferably identified using explicit names instead of the PLMN-IDs. The names may be determined using the aforementioned EF_{PNN} stored in the user identification module 109. From the list the user selects a core network 102a,b, 105 of his choice and the PLMN selector 204, which receives the selection of the user, controls the mobile communication device 103 to try to register in the core network 102a,b, 105 selected by the user. If the registration is successful, the core network 102a,b, 105 is selected to serve the mobile communication device 103. In case of a registration failure, the PLMN selector 204 may again present the list of available core networks 102a,b, 105 to the user so that the user selects another core network 102a,b, 105, in which the mobile communication device 103 then tries to register.

For registering in a core network 102a,b, 105, the mobile communication device 103 establishes a radio connection to the base station system 106, 110 serving the radio cell of the radio access network 101, 104 connected to the core network 102a,b, 105. Via the radio connection, the mobile communication device 103 sends a request for registration, which is forwarded to the core network 102a,b, 105 and which is answered affirmative or in the negative depending on whether the registration in the core network 102a,b, 105 is successful or not.

The base station system 110 of the radio access network 104 routes the request for registration to the only connected core network 105 by default. In order to register in one of the core networks 102a,b connected with the shared radio access network 101, the mobile communication device 103 preferably informs the base station system 106 of the shared radio access network 101 of the core network 102a,b to which the registration is to be routed.

For this purpose, the mobile communication device 103 may sends to the base station system 106 the PLMN-ID associated with the core network 102a,b which has been selected for registration. Upon having received the PLMN-ID, the base station system 106 routes the registration request of the mobile communication device 103 to the associated core network 102a,b, 105. The mobile communication device 103 may send the PLMN-ID to the base station system 106, when establishing the radio connection, or it may send the PLMN-ID together with the registration request.

The registration in a core network 102a,b may differ depending on whether the mobile communication device 103 whishes to register in the CS or in the PS part of the core network 102a,b, or in both parts. In particular, different protocols may be applied. First protocols may be applied for registering in the CS part. Using these protocols the registration request received in the base station system 106 is routed to the switching unit 107a,b of the core network 102a,b, which processes the request. A request for registering in the PS part or in both parts may be send to the base station system 106 and forwarded from the base station system to the routing unit 108a,b of the relevant core network using second protocols. Suitable first or second protocols are, in principle, known to a person skilled in the art.

The PLMN selection process may be performed in the same way for registration in the CS and/or in the PS part of a core network 102a,b, 105. However, in connection with the PLMN selection process, it is specified for which part a registration is to be performed, preferably before the selection process in initiated.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A method for selecting a core network (102a; 102b; 105) to serve a mobile communication device (103), the method comprising:
- receiving in the mobile communication device (103) a first identifier from a shared radio access network (101) being connected to multiple core networks (102a, 102b),
- reading second identifiers of the multiple core networks (102a, 102b) from a data item (203) stored in the mobile communication device (103) upon receipt of the first identifier, the data item (203) comprising an allocation between the first identifier and the second identifiers,
- selecting the core network (102a; 102b; 105) from a group of available core networks (102a; 102b; 105), the group being determined based upon the second identifiers.

2. A method according to claim 1, wherein the data item (203) is accessed for reading the second identifiers only in response to a receipt of information broadcasted by the shared radio access network (101), the information indicating that the radio access network (101) is shared.

3. A method according to claim 2, wherein the information is included in a predetermined bit in the system broadcast information (SBI) sent by the shared radio access network (101).

4. A method according to one of the preceding claims, wherein the data item is stored in a user identification module (109) included in the mobile communication device (103).

5. A method according to one of the preceding claims, wherein the group of available core networks (102a; 102b; 105) is further determined based on at least one third identifier received from a further radio access network (104).

6. A method according to one the preceding claims, wherein upon a selection of a core network (102a; 102b) associated with one second identifier, the second identifier is transmitted to the shared radio access network (101) in connection with a request for registering the mobile communication device (103) in the core network (102a; 102b) associated with the second identifier.

7. A method according to claim 6, wherein the shared radio access network (101) routes the request to the core network (1 02a; 102b) associated with second identifier received in connection with the request.

8. A method according to one of the preceding claims, wherein the shared radio access network (101) is a GERAN.

9. A computer program including software code for executing a method according to one of the preceding claims, when the computer program is executed on a processor unit.

10. A mobile communication device (103) comprising
a data item (203) including an allocation between a first identifier broadcasted in a shared radio access network (101) and second identifiers associated to multiple core networks (102a, 102b) connected to the shared radio access network (101),
an evaluation unit (202) being adapted to read the second identifiers from the data item (203) upon receipt of the first identifier from the shared radio access network (101), and
a selector (204) being adapted to select a core network (102a; 102b; 105) from a group of available core networks (102a; 102b; 105), the group being determined based upon the second identifiers.

11. A mobile communication device (103) according to claim 10, wherein the evaluation unit (202) is further adapted to access the data item for reading the second identifiers only in response to a receipt of information broadcasted by the shared radio access network (101), the information indicating that the radio access network is shared.

12. A mobile communication device (103) according to claim 10 or 11, wherein the selector (204) is further adapted to determine the group of available core networks (102a; 102b; 105) based on at least one third identifier received from a further radio access network (104).

13. A mobile communication device (103) according to one of the claims 10-12, being further adapted to transmit one second identifier to the shared radio access network (101) in connection with a request for registering the mobile communication device (103) in the core network associated with the second identifier upon a selection of a core network (1 02a; 102b) associated with the second identifier.

14. A system comprising a mobile communication device (103) according to claim 13 and the shared radio access network (101), the shared radio access network (101) being adapted to route the request to the core network (102; 102b) associated with the second identifier received in connection with the request.
